(19) Europäisches Patentamt
European Patent Office
Office européen des brevets

(11) Publication number: **0 216 633 A2**

# (12) EUROPEAN PATENT APPLICATION

(21) Application number: 86307304.5

(51) Int. Cl.[4]: **B 01 D 13/04**

(22) Date of filing: 23.09.86

(30) Priority: 25.09.85 JP 213188/85

(43) Date of publication of application: 01.04.87 Bulletin 87/14

(84) Designated Contracting States: DE FR GB

(71) Applicant: SUMITOMO ELECTRIC INDUSTRIES LIMITED
No. 15, Kitahama 5-chome Higashi-ku
Osaka-shi Osaka 541(JP)

(72) Inventor: Yamada, Katsuya c/o Osaka Works
Sumitomo Electric Ind.Ltd. 1-3 Shimaya 1-chome
Konohana-ku Osaka-shi Osaka(JP)

(72) Inventor: Asako, Shigeru c/o Osaka Works
Sumitomo Electric Ind.Ltd. 1-3 Shimaya 1-chome
Konohana-ku Osaka-shi Osaka(JP)

(72) Inventor: Okita, Koichi c/o Osaka Works
Sumitomo Electric Ind.Ltd. 1-3 Shimaya 1-chome
Konohana-ku Osaka-shi Osaka(JP)

(72) Inventor: Toyo-Oka, Shin-Ichi c/o Osaka Works
Sumitomo Electric Ind.Ltd. 1-3 Shimaya 1-chome
Konohana-ku Osaka-shi Osaka(JP)

(74) Representative: Pearce, Anthony Richmond et al,
MARKS & CLERK Alpha Tower Suffolk Street
Queensway Birmingham B1 1TT(GB)

**(54) Composite membrane comprising porous hollow fibers and process for producing the same.**

(57) Disclosed are a composite membrane comprised of porous hollow fibers which comprises a support membrane of porous hollow fibers which is coated either on the outer surface of the inner surface or on both surfaces with a membrane formed by plasma-assisted polymerization, said support membrane being principally formed of poly(2,6-dimethylphenylene oxide) having a recurring unit represented by the structural formua:

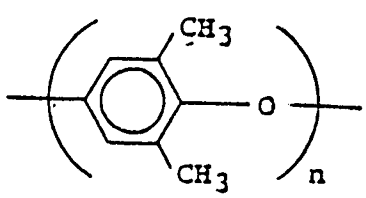

(n: natural number).

EP 0 216 633 A2

# COMPOSITE MEMBRANE COMPRISING POROUS HOLLOW FIBERS AND PROCESS FOR PRODUCING THE SAME

## FIELD OF THE INVENTION

The present invention relates to a composite membrane comprising porous hollow fibers and a process for producing the same. More particularly, the present invention relates to a composite membrane having a film formed by plasma polymerization on a support which comprises porous hollow fibers comprising poly(2,5-dimethylphenylene oxide). The present invention also relates to a process for producing said composite membrane.

## BACKGROUND OF THE INVENTION

With the increasing need for using functional membrane materials in industrial and medical fields, active efforts have been made to develop such functional membrane materials. The efforts which have been made in industrial fields are directed to the development of ultrafiltration, reverse osmosis, and gas-separating membranes which are capable of desalination of sea water, production of pure water, uranium enrichment, purification and concentration of foodstuffs, separation of oil and water, enrichment and recovery of helium, oxygen enrichment, and separation of methane and carbon dioxide.

The research activities which have been made in medical fields are directed to the development of artificial kidneys, artificial lungs, membranes capable of separating plasma from blood, the walls of capsules in which topical application of drugs is to be effected, artificial blood vessels, and antithrombotic catheters. Some of these efforts have been commercialized but not all of the commercially available functional membrane materials exhibit completely satisfactory properties.

Typical examples of the membranes heretofore employed for separation purposes include cellulose type porous membranes based on acetyl cellulose and ethyl cellulose, porous membranes of engineering plastics such as polysulfone, porous amide type or imide type membranes, porous polypropylene membranes, and porous membranes based on fluorine-containing compounds such as polytetrafluoroethylene.

Among the membrane-forming materials listed above, ethyl cellulose is used as the material for membranes of oxygen-enriching since it exhibits higher oxygen permeability than any other materials and has a relatively high selective permeability to oxygen compared with nitrogen. Polysulfone and polyimide have a relatively low gas permeability but, because of their high selective permeability to hydrogen compared with carbon

monoxide, they are used as the materials of membranes which are intended to be empolyed in hydrogen separation or enrichment/recovery of helium.

Porous membranes made of regenerated cellulose or polypropylene are used in making artificial kidneys, while porous polytetrafluoroethylene membranes are used advantageously in applications such as filtration of organic solvents where high solvent resistance is required.

As shown above, various materials are used in different applications depending on their specific features such as gas permeation characteristics, solvent resistance, mechanical properties, and workability.

One of the materials which has recently received attention as being suitable for use in the making of membranes especially designed for gas separation purposes is poly(2,6-dimethylphenylene oxide) (hereinafter abbreviated as "PPO"). This material is superior not only in gas permeability but also in mechanical strength and resistance to heat and solvents, and its characteristics are equal to or better than those of conventional engineering plastics such as polysulfone. However, the very fact that PPO has high solvent resistance has presented a problem in association with its working, notably in the state of a solution. As described in U.S.

Patent 3,709,774 and West German Patent Application (OLS) No. 2,153,646, a porous membrane is prepared from PPO in a mixed solvent system wherein a poor solvent as a swelling agent is combined with a chlorine-based solvent which is a good solvent but which is not suitable for providing a desired porous membrane if it is used alone. However, the mixed solvent systems disclosed in these patents are not highly suitable for the making of strong porous membranes and the fact that the coagulant system available is limited to methanol thus these systems have difficulty in realizing fine control of the membrane structure over a wide range.

Most recently, attempts have been made to modify PPO so that it has enhanced solubility and, hence, improved workability, or that it exhibits improved gas permeation characteristics. For example, Japanese Patent Application (OPI) No. 117321/82 (the term "OPI" as used herein means an unexamined published Japanese patent application) proposes halogenation or amination of PPO at the benzyl position; Japanese Patent Application (OPI) No. 55008/83 proposes prenylation of PPO at the benzyl position; Japanese Patent Application (OPI) No. 216703/83 proposes chlorosulfonation or arylsulfonation of PPO; Japanese Patent Application (OPI) No. 39304/83 shows bromination of PPO at both cyclic and benzyl positions;

and Japanese Patent Application (OPI) No. 222203/84 discloses aminosiliconization of PPO. However, none of these methods have succeeded in producing porous membranes which satisfy the requirements for both high selective permeability and rapid permeation.

The two requirements of high slectivity and rapid permeation have been satisfied simultaneously by the methods shown in Japanese Patent Application (OPI) Nos. 41524/85, 51524/85 and 51525/85 wherein PPO, after being brominated to provide improved solubility, is formed into an asymmetrically porous membrane, which then is rendered insoluble by crosslinking with an amine. The membranes produced by these methods also have high solvent resistance. However, these methods are complicated since they involve at least three steps of solubilization, film making, and insolubilization. In addition, the steps of solubilization and insolubilization have a tendency to introduce residual active sites which are likely to cause deterioration of the membrane with time.

Instead of producing membranes from single polymers, numerus attempts have been made to fabricate blended or composite membranes and they are currently under review. An approach using PPO is described in Japanese Patent Application (OPI) No. 95538/83, wherein PPO is mixed with silicone oil such that a membrane of

asymmetric porosity is obtained that exhibits an increased gas permeability and which yet retains high selectivity for a particular gas. Japanese Patent Application (OPI) No. 199001/84 discloses a composite membrane wherein PPO and silicone rubber are successively deposited on a high-molecular weight porous membrane support. In the composite membrane shown in Japanese Patent Application (OPI) No. 203604/84, a membrane formed of a blend of PPO and a silicone copolymer is sandwiched between layers of a silicone copolymer and the assembly is deposited on a support. However, none of these composite membranes have attained satisfactory results.

The composite membanes described in Japanese Patnet Application (OPI) No. 86684/78 and U.S. Patent 4,230,463 are made from polysulfone hollow fibers and they have practically acceptable levels of gas selectivity and permeability. However, these types of composite membrane are limited in performance in that their selective gas permeabilities are no higher than those of the materials of which the supports are made.

## SUMMARY OF THE INVENTION

It has been found in the present invention that if unmodified PPO which is forcibly dissolved in a nitrogen-containing heterocyclic compound by heating at an elevated temperature is extruded, with the solution being

held at the elevated temperature, in a hollow fiber form into a coagulating bath, and if the solvent is extracted after fiber coagulation, a porous membrane comprising hollow fibers can be obtained by simple steps. The resulting membrane has been found to have high resistance to solvents and heat, and exhibits high mechanical strength, and yet displays rapid gas permeation and high selective permeability for a particular gas. It has also been found in the present invention that the selective permeability of the membrane comprising hollow fibers is markedly improved without substantially impariring its permeation rate if a very thin layer formed by plasma-assisted polymerization is deposited over the surface of the membrane of hollow fibers.

DETAILED DESCRIPTION OF THE INVENTION

The PPO used in the present invention is poly(2,6-dimethylphenylene oxide) which is prepared by polymerizing 2,6-dimethylphenol through an oxidative coupling reaction as effected in the presence of a cuprous chloride/pyridine complex as a catalyst, and has a repeating unit represented by the structural formula:

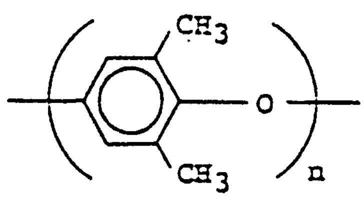

(n: natural number).

The molecualr weight of the PPO of the present invention is not particularly limited, and those which can be formed into a film can be used.

Examples of the solvents for dissolving PPO include nitrogen-containing heterocyclic compounds such as N-formylpiperidine, N-formylmorpholine and N-methyl-2-pyrrolidone; amide solvents such as dimethylformamide and dimethylacetamide; and chlorinated hydrocarbons such as tetrachloroethane, chloroform, chlorobenzene and o-dichlorobenzene. These solvents may be used either independently or in admixture. Perferable solvents for PPO are nitrogen-containing heterocyclic compounds, with N-methyl-2-pyrrolidone being particularly preferable.

One of the features of the present invention is that PPO is formed into a membarane comprising porous hollow fibers to form the support membrane. Either of the outer or inner surface of individual hollow filber or both surfaces preferably have an average pore size of 0.1 micrometer or less or non-porous, wherein the thin wall part of the support membrane has a porous structure with pores of varying sizes toward each of the surfaces. More preferably, either of the outer or inner surface or both surfaces of the support membrane have a dense structure.

The term "a thin wall part" used herein means a portion other than the outer and inner surfaces of the support membrane. The term "a surface having a dense structure" used herein means a situation where the diameter of the pores decreases toward the surface and the surface is substantially non-porous.

In order to attain this fiber structure at will, it is preferable that a nitrogen-containing heterocyclic compound be used as a solvent for PPO.

The porosity of the support membrane is preferably from 20 to 80%, more preferably 30 to 70%. The strength of the support membrane is generally from 100 to 300 $kg/cm^2$.

The concentration of PPO in solution is preferably within the range of 10 to 50%, with the range of 20 to 40% being particularly preferable. In order to prepare a solution of PPO, it must be dissolved by heating to a temperature higher than room temperature, with care being taken so as not to cause any decomposition of the PPO or solvent or reaction therebetween. The heating temperature is generally selected at about from 80 to 130°C, preferably from 90 to 120°C, but is by no means limited to any particular value.

The thus-prepared solution of PPO is extruded into a coagulating bath through the outer tube of a

sheathed nozzle. Throughout the extrusion operation, the temperature of the PPO solution must be maintained at a temperature which is not lower than point at which the solution gels and not higher than the boiling point of the solvent. If the temperature of the solution is below its gelling point, it is difficult to obtain a membrane of hollow fibers having a practical level of strength. If, on the other hand, the temperature of the solution is higher than the boiling point of the solvent, sudden boiling of the solvent occurs and presents difficulty in controlling the structure of the membrane as the final product. If the temperature of the PPO solution is adjusted to be not lower than its gelling point and not higher than the boiling point of the solvent, proper control can be attained with respect to such factors as the structure near the dense surface of the membrane, the porosity of the hollow fiber, the shape of its pores, and the strength of the membrane of hollow fibers. The temprature of the coagulating bath is preferably from 10 to 90°C, more preferably from 40 to 90°C.

Generally, when the temperaure of the PPO solution is high, the porosity tends to be lower, and when the temperature of the coagulating bath is high, the porosity tends to be lower, the strength tends to be higher, and the selectivity of the gas permeation

increases but the permeation rate decreases.

A core liquid is caused to flow through the inner tube of the sheathed nozzle for the purpose of ensuring the formation of porous fibers having a hollow portion and for controlling the state of the inner surface of each hollow fiber. As the core liquid, a mixture of a solvent and a non-solvent is preferably used, more preferably a mixture of a solvent and water such as a dimethylformamide/water mixture and a N-methyl-2-pyrrolidone/water mixture is used.

The sheathed nozzle may be submerged in the coagulating bath or it may be positioned above the surface of the liquid of the bath. In the latter case, the properties of the outer surface of each hollow fiber being produced may be controlled by using any appropriate means such as a chimney which will reduce the evaporation of the solvent or which may be evacuated to promote the evaporation of the solvent.

A non-solvent which is miscible with the solvent may be used as a coagulant. If a nitrogen-containing heterocyclic compound is used as the solvent for PPO, water or alcohols or mixtures thereof may be used as the coagulant. By changing the type of the coagulant or the temperature or composition of the coagulating bath, proper control can be attained with respect to such factors as

the structure near the dense surface of the membrane comprising porous hollow fibers, the porosity of the hollow fiber, the shape of its pores, and the strength of the membane of hollow fibers. The structure of the membrane and its physical properties can also be controlled through addition of a solvent of an inorganic salt to the coagulating bath.nt.

An appropriate core liquid may be selected in consideration of the same factors as considered for selection of an appropriate coagulating bath.

The coagulated hollow fibers are subsequently washed with water to extract the solvent and fix the structure of the membrane. The washing step may be accompanied by a treatment with hot water for the purpose of accelerating the solvent extraction or stabilizing the structure and characteristics of the membrane.

The hollow fibers from which the solvent has been extracted are then dried and, if desired, heat-treated with a suitable heating medium such as hot air or heated metallic rollers. The drying temperature is preferably 180°C or less, more preferably from 80 to 150°C. Heat treatment is preferably conducted at 150°C or more, more preferably from 150 to 200°C but not higher than the heat distortion temperature of PPO.

Prior to drying and heat-treatment, the

non-solvent in the hollow fibers (i.e., water for washing) may be replaced with another non-solvent, such as an alcohol or a mixture of an alcohol and water, so that the ratio of the shrinkage of the hollow fibers being dried and heat-treated may be varied to thereby control the characteristics of the membrane. By this substutution, the pore diameter and the gas permeability and selectivity can be controlled, and when the composite membrane is used for ultrafltation or reverse osmosis, the water permeability, the salt exclusion ratio, etc. can be controlled.

In order to obtain the support membrane having a dense structure at only the outer surface, the non-solvent content of the coagulating bath is increased and that of the core liquid is decreased. In order to obtain the support membrane having a dense structure at only the inner surface, the solvent content of the coagulating bath is increased and the non-solvent content of the core liquid is increased, or a core gas is used as the core liquid. In order to obtain the support membrane having dense structure at both the outer and inner surfaces, the solvent content of the coagulating bath and that of the core liquid are decreased, or the solvent content of the coagulating bath is decreased and a core gas is used as the core liquid.

Examples of the polymerizable monomer which may be used in plasma polymerization include: hydrocarbon cmpounds such as methane, ethane, propane, ethylene, propylene, benzene, toluene, styrene and naphthalene; nitrogen-containing organic compounds such as allylamine, acrylonitrile, aniline, pyridine, N-methyl-2-pyrrolidone, N-vinylpyrrolidone, dimethyformamide and dimethylacetamide; fluorine-containing organic compounds such as tetrafluoroethylene and hexafluoropropylene; sulfides such as thiophene and carbon disulfide; and organic silicon compounds which is preferably represented by the structural formula: $X_n - Si - Y_{4-n}$ wherein n is a natural number of from 1 to 4; X each represent $CH_2=CH-$, $CH\equiv C-$ or $CH_2=CH-CH_2-$; and Y each represent $CH_3-$ or $CH_3-CH_2-$, such as trimethylvinylsilane, dimethyldichlorosilane, tetramethyldisilazane and tetramethyldisiloxane. Appropriate polymerizable monomers may be selected depending upon the use of the composite membrane comprising porous hollow fibers. If the membrane is to be used in applications where a high degree of hydrophilicity is required, polar monomers such as nitrogen-containing organic compounds are advantageous. For gas separation applications, organic silicon compounds are preferably used. Examples of the organic silicon compounds include

methylsilane compounds such as tetramethylsilane and dimethyldichlorosilane; alkoxysilane compounds such as dimethyldimethoxysilane and dimethyldiethoxysilane; siloxane compounds such as tetramethyldisiloxane; aminosilane compounds such as bis(dimethylamino)dimethylsilane, bis(dimethylamino)-methylsilane, bis(dimethylamino)methylvinylsilane, methyltris(dimetylamino)silane, bis(ethylamino)dimethylsilane and trimethylsilyldimethylamine; silazanes such as hexamethyldisilazane, 1,1,3,3-tetramethyldisilazane, and 1,1,3,3,5,5-hexamethylcyclotrisilazane; silyl isocyanate compounds such as trimethylsilyl isocyanate, dimethylsilyl diisocyanate and vinylmethylsilyl diisocyanate; and organic silane compounds having at least one unsaturated bond such as trimethylvinylsilane, dimethyldivinylsilane, methyltrivinylsilane, tetravinylsilane, dimethylvinylchlorosilane, aryltrimethylsilane, ethynyltrimethylsilane and dimethylphenylvinylsilane. Organic silane compounds having at least one unsaturated bond are used with particular advantage since they are easily activated in a plasma atmosphere and are easily formed into a membrane having a highly crosslinked and branched structure by plasma polymerization. Particularly preferable examples of these compounds are methyltrivinylsilane and ethynyltrimethylsilane.

The thickness of the film formed by plasma polymerization also varies with the use of the composite membrane and is generally not greater than 10 micrometer, preferably not greater than 1 micrometer. Thickness greater than 10 micrometer may be employed but such a thick membrane is not highly stable because it may crack under internal stresses or may even separate from the support membrane. If the composite membrane is to be used in such applications as gas separation and reverse osmosis, the film formed by plasma polymerization is preferably as thin as possible without being so thin as to introduce pinholes or other surface defects. Preferably, the composite membrane intended for use in gas separation or reverse osmosis has a film formed by plasma polymerization which has a thickness of not greater than 1 micrometer, more preferably not greater than 0.3 micrometer.

Plasma polymerization may be performed by introducing a polymerizable gas into a bell jar or tubular reaction vessel where a glow discharge is produced by radio waves, microwaves or by application of a d.c. voltage. More specifically, the support membrane comprising hollow fibers may be first introduced into the reaction vessel held at a reduced pressure of 5 Torr or below, preferably at 2 Torr or below, and as the

polymerizable monomer is fed into the reaction vessel, a glow discharge is produced such that a membrane is deposited on the support membrane as a result of plasma polymerization.

While a single polymerizable monomer is typically used, a mixed, or copolymerized or multi-layered membrane may be deposited by plasma polymerization by, for example, mixing two or more monomers, or successively introducing two or more monomers into the reaction vessel, or by introducing different monomers into a plurality of reaction vessels. Inert gases such as He and Ar, or unpolymerizable gases such as $H_2$, $N_2$, $O_2$ and CO may be supplied together with the monomer(s) as carrier gases or diluent gases for the monomer(s).

The operating conditions for glow discharge should be varied according to the type of the monomer used, the type of the apparatus, the shape of the electrodes, and other factors. Generally, glow discharge is produced at an output ranging from 5 to 500 watts and is continued for a period ranging between 10 and 1,000 seconds. If other conditions are the same, the thickness of the membrane formed by plasma polymerization is substantially proportional to the duration of glow discharge. If the output of glow discharge is excessively low, the resulting polymer has too low a molecular weight

to form a desirable film. Excessively high outputs of glow discharge should also be avoided because the support membrane or the deposit thereon may be damaged by etching action or heat generation.

Even if it is not placed under such extreme conditions, an ordinary support membrane will, during plasma polymerization, be subject to a not small degree of damage by the plasma and will evolve decomposition gases. This phenomenon is believed to cause adverse effects not only on the rate at which a membrane is deposited by plasma polymerization but also on the characteristics of the finally obtained composite membrane.

The PPO used in the present invention is extremely resistant to plasma and will produce such a small amount of decomposition gases during plasma polymerization that rapid deposition of a film is ensured. Therefore, compared with supports made of other materials, the one which is formed of PPO will allow plasma polymerization to be performed under conditions covering a broad range, with the attendant advantage that the scope of alternative polymerizable monomers is expanded. This means that the characteristics of the composite membrane can be controlled over an even wider range, which is one major advantage of the present invention.

The following example if given here for the

purpose of further illustrating the present invention but should in no sense be taken as limiting.

EXAMPLE

Thirty-five (35) parts by weight of PPO was uniformly dissolved in 65 parts by weight of N-methyl-2-pyrrolidone by heating at about 110°C under agitation. With its temperature held constant, the solution was extruded into water at about 30°C through a sheathed nozzle heated at 110°C, while a core liquid was caused to flow through the inner tube of the sheathed nozzle. A mixture of 90 parts by weight of N-methyl-2-pyrrolidone and 10 parts by weight of water was used as the core liqud. The coagulated hollow fibers were washed with water to extract the solvent and dried at 90 to 120°C to provide a support membrane comprised of porous hollow fibers.

The support membrane was charged into a reaction vessel and a composite membrane was formed by performing plasma polymerization at a pressure of 0.45 Torr for about 3 minutes at an output of 20 watts with methyl trivinylsilane being fed into the vessel as a monomer gas. The gas permeation characteristics of the support membrane and the composite membrane are summarized in Table below.

Table

| | $QH_2$*1 | $QCO$*2 | $\alpha H_2/CO$*3 |
|---|---|---|---|
| Support membrane | $2.4 \times 10^{-4}$ | $5.0 \times 10^{-5}$ | 48 |
| Composite membrane | $2.5 \times 10^{-5}$ | $8.2 \times 10^{-8}$ | 305 |

*1 $QH_2$: rate of hyfdrogen permeation ($cm^3/cm^2 \cdot sec \cdot cmH_g$)

*2 QCO: rate of carbon oxide permeation ($cm^3/cm^2 \cdot sec \cdot cmHg$)

*3 $\alpha H_2/CO$: selective permeability to $H_2$ ($H_2/CO = QH_2/QCO$).

Conditions of measurement: 100°C at a differential pressure of 2.5 $kg/cm^2$.

In accordance with the present invention, a composite membrane comprising porous hollow fibers which features not only rapid gas permeation and high selective gas permeability but also high heat and solvent reistance and high mechanical stength is obtainable. If the size of pores in the surface of the composite membrane or the conditions of plasma polymerization are properly controlled, a product is obtained which finds utility in such applications as reverse osmosis membranes, ultrafiltration membranes, blood plasma separating membranes, artificial lungs and liquid membranes.

While the invention has been described in detail and with reference to specific embodiments thereof, it will be apparent to one skilled in the art that various

changes and modifications can be made therein without departing from the spirit and scope thereof.

CLAIMS:

1. A composite membrane comprising a support membrane of porous hollow fibers which is deposited, either on the outer surface or the inner surface or on both surfaces, with a film formed by plasma polymerization, said support membrane consisting essentially of poly(2,6-dimethylphenylene oxide) having a repeating unit represented by the structural formula:

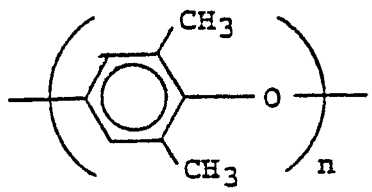

(n: natural number).

2. A composite membrane as in claim 1, wherein either the outer surface or the inner surface or both surfaces of said support membrane of porous hollow fibers has an average pore size of 0.1 micrometer or less or non-porous, wherein the thin wall part of said support membrane has a porous structure with pores of varying sizes toward each of the surfaces.

3. A composite mambrane as in claim 2, wherein either the outer surface or the inner surface or both surfaces of said support membrane have a dense structure.

4. A composite membrane as in claim 1, wherein said film formed by plasma polymerization is made of an organic silicon compound.

5. A composite membrane as in claim 4, wherein said film formed by plasma polymerization is made of an organic silane compound having at least one unsaturated bond.

6. A composite membrane as in claim 5, wherein said organic silane compound is represented by the structural formula: $X_n - Si - Y_{4-n}$ wherein n is a natural number of from 1 to 4; X each represent $CH_2{=}CH-$, $CH{\equiv}C-$ or $CH_2{=}CH-CH_2-$; and Y each represent $CH_3-$ or $CH_3-CH_2-$.

7. A composite membrane as in claim 6, wherein said organic silane compound is methyltrivinylsilane or ethynyltrimethylsilane.

8. A composite membrane as in claim 1, wherein said film formed by plasma polymerization has a thickness of not more than 10 micrometer.

9. A composite membrane as in claim 8, wherein said film formed by plasma polymerization has a thickness of not more than 1 micrometer.

10. A composite membrane as in claim 9, wherein said film formed by plasma polymerization has a thickness of not more than 0.3 micrometer.

11. A process for producing a composite membrane comprising the steps of

(a) dissolving in a nitrogen-containing heterocyclic compound a poly(2,6-dimethylphenylene oxide)

having a repeating unit represented by the structural formula:

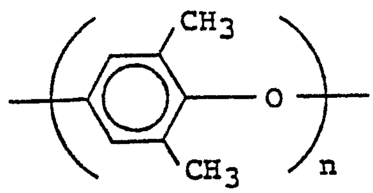

(n: natural number);

(b) extruding the resulting solution under heating into a coagulating bath through the outer tube of a sheathed nozzle while, at the same time, a core liquid is caused to flow through the inner tube of said sheathed nozzle;

(c) coagulating the resulting hollow fibers, extracting the solvent therefrom and drying the same to provide a support membrane comprising the porous hollow fibers; and

(d) depositing a film on said support membrane by plasma polymerization with a glow discharge being produced in a polymerizable monomer while being supplied at a pressure not higher than 5 Torr.

12. A process for producing a composite membrane as in claim 11, wherein said solution of a poly(2,6-dimethylphenylene oxide) has a concentration of from 10 to 50 wt%.

13. A process for producing a composite membrane as in claim 12, wherein said solution of a

poly(2,6-dimethylphenylene oxide) has a concentration of from 20 to 40 wt%.

14. A process for producing a composite membrane as in claim 11, wherein said nitrogen-containing heterocyclic compound is N-methyl-2-pyrrolidone.

15. A process for producing a composite membrane as in claim 11, wherein said solution of a poly(2,6-dimethylphenylene oxide) is extruded into said coagulating bath while being maintained at a temperature not lower than the point at which said solution gels and not higher than the boiling point of said nitrogen-containing heterocyclic compound.

16. A process for producing a composite membrane as in claim 11, wherein the coagulated hollow fibers are extracting the solvent therefrom by washing with hot water.

17. A process for producing a composite membrane as in claim 11, wherein said polymerizable monomer is an organic silicon compound.

18. A process for producing a composite membrane as in claim 17, wherein said polymerizable monomer is an organic silane compound having at least one unsaturated bond.

19. A process for producing a composite membrane as in claim 18, wherein said organic silane

compound has the structural formula: $X_n - Si - Y_{4-n}$ wherein n is a natural number of 1 to 4; X each represents $CH_2{=}CH-$, $CH{\equiv}C-$ or $CH_2{=}CH-CH_2-$; and Y each represent $CH_3-$ or $CH_3-CH_2-$.

20. A process for producing a composite membrane as in claim 19, wherein said organic silane compound is methyltrivinylsilane or ethynyltrimethylsilane.

21. A process for producing a composite membrane as in claim 11, wherein said film formed by plasma polymerization has a thickness of not more than 10 micrometer.

22. A process for producing a composite membrane as in claim 21, wherein said film formed by plasma polymerization has a thickness of not more than 1 micromter.